# EUROPEAN PATENT SPECIFICATION

(11) **EP 4 093 825 B1**
(45) Date of publication and mention of the grant of the patent: **08.11.2023**
(21) Application number: 21700891.1
(22) Date of filing: 15.01.2021
(51) Int. Cl.: C08L 95/00, C08G 18/10, C08G 18/64, C08G 18/76, C08L 61/28, C08L 63/00, E01C 7/18, E01C 7/22, E01C 7/26

(54) **LOW TEMPERATURE PROCESS FOR THE PREPARATION OF AN ASPHALT MIX COMPOSITION**
NIEDERTEMPERATURVERFAHREN ZUR HERSTELLUNG EINER ASPHALTMISCHUNGSZUSAMMENSETZUNG
PROCÉDÉ À BASSE TEMPÉRATURE POUR LA PRÉPARATION D'UNE COMPOSITION DE MÉLANGE D'ASPHALTE

(30) Priority: 23.01.2020 EP 20153372
(43) Date of publication of application: 30.11.2022
(73) Proprietor: BASF SE, 67056 Ludwigshafen am Rhein (DE)
(72) Inventor: ZEILINGER, Michael, 67056 Ludwigshafen (DE); SCHATZ, Waldemar, 49448 Lemfoerde (DE); BOKERN, Stefan, 49448 Lemfoerde (DE); WIEBELHAUS, Dag, 67056 Ludwigshafen (DE); OTERO MARTINEZ, Iran, 49448 Lemfoerde (DE)
(74) Representative: BASF IP Association
(86) International application number: PCT/EP2021/050773
(87) International publication number: WO 2021/148313

(56) References cited:
- EP-A1- 3 006 525
- WO-A1-01/30911
- WO-A1-01/30913
- WO-A1-2017/125421
- Anonymous: "The use of Warm Mix Asphalt", EAPA Position Paper, 1 January 2014 (2014-01-01), pages 1-23, XP055585660, Retrieved from the Internet: URL:https://eapa.org/wp-content/uploads/20 18/07/EAPA-paper-Warm-Mix-Asphalt-version- 2014-1.pdf [retrieved on 2019-05-06]
- Anonymous: "Hot Mix Asphalt Paving Handbook, AC 150/5370-14A, Appendix 1, Part II-a", , 1 January 2001 (2001-01-01), pages 1-11, XP055668619, Retrieved from the Internet: URL:https://www.faa.gov/documentLibrary/me dia/advisory_circular/150-5370-14A/150_537 0_14a_app1_part_II_a.pdf [retrieved on 2020-02-14]
- Annonymous: "HOT MIX ASPHALT PLANT OPERATIONS, Chapter 3", , 23 December 2007 (2007-12-23), pages 1-78, XP055078506, Retrieved from the Internet: URL:http://web.archive.org/web/20071223141 536/http://www.in.gov/indot/files/chapter_ 03(5).pdf [retrieved on 2013-09-10]
- Annonymous: "NOMAD(TM) Hot Mix Asphalt Plant", , 1 January 2008 (2008-01-01), pages 1-5, XP055078499, Retrieved from the Internet: URL:http://www.astecinc.com/images/file/li terature/Nomad_with_Baghouse.pdf [retrieved on 2013-09-10]
- Anonymous: "Best Management Practices To Minimize Emissions During HMA Construction; EC-101 4/00", , 1 April 2000 (2000-04-01), pages 1-12, XP055663862, Retrieved from the Internet: URL:https://store.asphaltpavement.org/pdfs /ec-101.pdf [retrieved on 2020-01-31]
- Malcolm D Graham ET AL: "Reduced Mixing Time for Asphalt Concrete Mixes", Paper presented at the 47th Annual Meeting., 1 January 1968 (1968-01-01), pages 1-17, XP055668568, Retrieved from the Internet: URL:http://onlinepubs.trb.org/Onlinepubs/h rr/1968/248/248-001.pdf [retrieved on 2020-02-13]
- BECKER Y ET AL: "Polymer Modified Asphalt", VISION TECNOLOGICA, INTEVEP, LOS TEQUES, VE, vol. 9, no. 1, 1 January 2001 (2001-01-01) , pages 39-50, XP002206873, ISSN: 1315-0855
- Bjarne Bo Jensen ET AL: "15 YEARS EXPERIENCE ADDING POLYMER POWDER DIRECTLY INTO THE ASPHALT MIXER", 5th Eurasphalt & Eurobitume Congress, 13-15th June 2012, Istanbul, 15 June 2012 (2012-06-15), pages 1-8, XP055551940, Istanbul, Turkey Retrieved from the Internet: URL:https://www.h-a-d.hr/pubfile.php?id=43 6 [retrieved on 2019-02-05]
- HESAMI EBRAHIM ET AL: "Study of the amine-based liquid anti-stripping agents by simulating hot mix asphalt plant production process", CONSTRUCTION AND BUILDING MATERIALS, vol. 157, 2017, pages 1011-1017, XP085233762, ISSN: 0950-0618, DOI: 10.1016/J.CONBUILDMAT.2017.09.168
- LUO SANG ET AL: "Performance evaluation of epoxy modified open-graded porous asphalt concrete", CONSTRUCTION AND BUILDING MATERIALS, ELSEVIER, NETHERLANDS, vol. 76, 12 December 2014 (2014-12-12), pages 97-102, XP029144339, ISSN: 0950-0618, DOI: 10.1016/J.CONBUILDMAT.2014.11.057 cited in the application
- FANG CHANGQING ET AL: "Preparation and properties of isocyanate and nano particles composite modified asphalt", CONSTRUCTION AND BUILDING MATERIALS, ELSEVIER, NETHERLANDS, vol. 119, 13 May 2016 (2016-05-13), pages 113-118, XP029572723, ISSN: 0950-0618, DOI: 10.1016/J.CONBUILDMAT.2016.04.099 cited in the application
- BENJAMIN SUTTER ET AL: "Sampling and Analysis of Bitumen Fumes: Comparison of German and French Methods to Determine a Conversion Formula", ANNALS OF WORK EXPOSURES AND HEALTH, vol. 62, no. 6, 4 May 2018 (2018-05-04), pages 721-732, XP055713440, ISSN: 2398-7308, DOI: 10.1093/annweh/wxy029

## Description

### TECHNICAL FIELD

The present invention relates to a low temperature process for the preparation of an asphalt mix composition, an asphalt mix composition obtained or obtainable by said process, the use thereof and a process for asphalting at reduced laydown temperatures.

### INTRODUCTION

In general, asphalt is a colloidal material containing different molecular species classified into asphaltenes and maltenes. Asphalt being viscoelastic and thermoplastic suffers property variation over a range of temperatures, from extreme cold to extreme heat. Asphalt tends to soften in hot weather and crack in extreme cold. At cold temperatures, asphalts become brittle and are subject to crack while at elevated temperatures they soften and lose physical properties.

The addition of a thermosetting reactive component as binders respectively in more general terms as modifier allows the physical properties of the asphalt to remain more constant over a range of temperatures and/or improve the physical properties over the temperature range the asphalt is subjected to.

Such asphalts that are modified by added binders respectively modifiers are known for years in the state of the art. But there is still a need in the asphalt industry, however, for improved asphalts. In part this is because currently known polymer-modified asphalts have several deficiencies. These include susceptibility to for instance permanent deformation (rutting), flexural fatigue, moisture, decrease of elasticity at low temperature operation.

WO 01/30911 A1 discloses an asphalt composition comprising, by weight based on the total weight of the composition, about 1 to 8 %, of a polymeric MDI, where the polymeric MDI has a functionality of at least 2.5. It also relates to a process for preparing said asphalt composition, using reaction times of below 2 hours. The formation of the product MDI-asphalt is measured by an increase in the product's viscosity or more preferably by dynamic mechanical analysis (DMA).

WO 01/30912 A1 discloses an aqueous asphalt emulsion comprising, besides asphalt and water, an emulsifiable polyisocyanate. It also relates to an aggregate composition comprising said emulsion, and to processes for preparing said compositions

WO 01/30913 A1 discloses an asphalt composition comprising, by weight based on the total weight of the composition, about 1 to 5 %, of a polymeric MDI based prepolymer, where the polymeric MDI has a functionality of at least 2.5. It also relates to a process for preparing said asphalt composition.

https://eapa.org/wp-content/uploads/2018/07/EAPA-paper-Warm-MixAsphalt-version-2014-1.pdf "The use of Warm Mix Asphalt", EAPA Position Paper, 1 January 2014, pp 1-23, discloses Warm Mix Asphalt (WMA) technologies for producing asphalt at temperatures slightly above 100 °C with properties or performance equivalent to that of conventional HMA.

https://www.faa.gov/documentlibrary/media/advisory_circular/ 150-5370-14A/150_5370_14a_app 1 _partI I_a. pdf: "Hot Mix Asphalt Paving Handbook, AC 150/5370-14A, Appendix 1, Part II-a", 1 January 2001, pp 1-11, discloses hot-mix asphalt plant operations in the context of some types of asphalt plants, namely: batch plants, parallel-flow drum-mix plants, and counter-flow drum-mix plants.

http://web.archive.org/web/20071223141536/http://www.in.gov/indot/ files/chapter_03(5).pdf: "HOT MIX ASPHALT PLANT OPERATIONS, Chapter 3", 23 December 2007, pp 1-78, discloses hot mix asphalt plant operations in the context of batch and drum plants, the effect of plant type on HMA properties, aggregate blending, plant inspection and scale check, plant calibration and plant trouble shooting.

http://www.astecinc.com/images/file/literature/ Nomad_with_Baghouse.pdf: "NOMAD(TM) Hot Mix Asphalt Plant", 1 January 2008, pp 1-5, discloses the Nomad^{™} hot mix asphalt plant which comprises cold-feed bins, scalping screen, drying drum, liquid asphalt tank, twin-shaft coater, baghouse, surge bin and the control house.

https://store.asphaltpavement.org/pdfs/ec-101.pdf: "Best Management Practices To Minimize Emissions During HMA Construction; EC-101 4/00", 1 April 2000, pp 1-12, discloses best management practices to minimize emissions during HMA construction. In this context, it is disclosed that the Hot Mix Asphalt (HMA) producer must be aware that using appropriate storage, mixing, and compaction temperature for HMA is key to minimizing emissions. Furthermore, it is disclosed that a major goal should be to minimize temperatures while meeting specification densities.

Malcolm D Graham et al.: "Reduced Mixing Time for Asphalt Concrete Mixes", Paper presented at the 47th Annual Meeting, 1 January 1968, pp 1-17, discloses reduced mixing time for asphalt concrete mixers - in which context it is mentioned that individual plant design and condition influence time requirements for adequate distribution and asphalt coating of aggregate particles, necessitating plant-by-plant testing to qualify for reduced times.

BECKER Y et al.: "Polymer Modified Asphalt", VISION TECNOLOGICA, INTEVEP, LOS TE-QUES, VE, vol. 9, no. 1, 1 January 2001, pp 39-50, discloses modification of asphalt with polymers is considered the best option to improve asphalt properties. Furthermore, it is disclosed that polymers increase considerably the useful temperature range of the binders. Furthermore, it is disclosed that the possible limitations with modified bitumens are: (i) cost increase, (ii) possible compatibility and stability problems, (iii) some difficulties may arise in the storage of the bitumen, (iv) mixing temperatures, and (v) the length of time the material is held at elevated temperatures before laying.

Bjarne Bo Jensen et al.: "15 YEARS EXPERIENCE ADDING POLYMER POWDER DIRECTLY INTO THE ASPHALT MIXER", 5th Eurasphalt & Eurobitume Congress, 13-15th June 2012, Istanbul, 15 June 2012, pp 1-8, discloses that it has been tried to raise the polymer addition of a special polymer powder to get better asphalt characteristics (better rut resistance and better fatigue properties). Laboratory results show improved binder characteristics and field trials on different types of road shows improved functionality of the asphalt pavement (less crack propagation, better rut resistance). Furthermore, it is disclosed that when adding the polymer directly into the asphalt mixer it is possible to modify even small amounts of asphalt with different bitumen hardness, and there is no need for special bitumen storage facilities.

HESAMI EBRAHIM et al.: "Study of the amine-based liquid anti-stripping agents by simulating hot mix asphalt plant production process", CONSTRUCTION AND BUILDING MATERIALS, vol. 157, 2017, pp 1011-1017, discloses simulating the HMA production conditions and then investigate the impacts of two types of liquid amine-based anti-stripping agents on the performance of HMA using the tensile strength ratio (TSR) and semi-circular Bending (SCB) tests. It is also disclosed that the results of this study indicated that effectiveness of these additives was significantly decreased after long-term being heated for HMA production.

LUO SANG et al.: "Performance evaluation of epoxy modified open graded porous asphalt concrete", CONSTRUCTION AND BUILDING MATERIALS, ELSEVIER, NETHERLANDS, vol. 76, 12 December 2014, pp 97-102, discloses a new open-graded porous asphalt mixture that uses epoxy asphalt as binder to improve mix durability. One type of epoxy asphalt that has been successfully applied in dense-graded asphalt concrete for bridge deck paving was selected for this study. Furthermore, is disclosed a procedure of compacting the mix into slab specimens and that a series of laboratory tests were conducted to evaluate the performance of the new mix, including Cantabro loss, permeability, acoustic absorption, indirect tensile, friction, shear stiffness and strength, and wheel rutting tests. Furthermore, is disclosed that the results showed superior overall performance of the epoxy modified open-graded porous asphalt mix compared to conventional open-graded porous asphalt mixes.

FANG CHANGQING et al.: "Preparation and properties of isocyanate and nano particles composite modified asphalt", CONSTRUCTION AND BUILDING MATERIALS, ELSEVIER, NETHERLANDS, vol. 119, 13 May 2016, pp 113-118, discloses that isocyanate modified asphalt samples were got by adding quantitative isocyanate into the base asphalt. Isocyanate and nano particles composite modified asphalt samples were produced by adding quantitative isocyanate and three different kinds of inorganic nanoparticles (silicon dioxide, titanium dioxide, zinc oxide) into the base asphalt respectively. Isocyanate modified asphalt, isocyanate and nanoparticles composite modified asphalt were characterized by taking physical tests, SEM, fluorescence microscopy, TG and FTIR tests, which demonstrated that the high and low temperature performance of isocyanate and nano particles composite modified asphalt had been improved effectively. It is further disclosed that from the microscopic view, the modification of the base asphalt was very significant - and that results also indicated that the temperature sensitivity of composite modified asphalt had been decreased. Furthermore, is disclosed that meanwhile the thermal stability had been improved when compared with the base asphalt and isocyanate modified asphalt.

EP 3 006 525 A1 discloses an asphalt-urethane composition which contains at least a component (A) obtained by adding an MDI prepolymer generated by reacting polyolefin polyol having two or more hydroxyl groups, short-chain polyhydric alcohol, and a monomer of MDI, a monomer of MDI, and a solvent a; and a component (B) including asphalt, a catalyst, and a solvent b.

WO 2017/125421 A1 discloses a method for producing an asphalt composition for road pavement including a step of mixing asphalt, a polyester resin, and an aggregate at 130°C or higher and 200°C or lower for 30 seconds or more, wherein the polyester resin is a polyester having an alcohol component-derived constituent unit containing 65 mol% or more of an alkylene oxide adduct of bisphenol A and a carboxylic acid component-derived constituent unit containing 50 mol% or more of at least one selected from the group consisting of terephthalic acid and isophthalic acid and has a softening point of 95°C or higher and 130°C or lower and a hydroxyl group value of 20 mgKOH/g or more and 50 mgKOH/g or less, and the polyester resin is mixed in a ratio of 5 parts by mass or more and 50 parts by mass or less based on 100 parts by mass of the asphalt.

EP 0 537 638 B1 discloses polymer modified bitumen compositions which contain 0.5 to 10 parts by weight of functionalized polyoctenamer to 100 parts by weight of bitumen and, optionally, crosslinking agents characterized in that the polyoctenamer is predominantly a trans-polyoctenamer and contains carboxyl groups, as well as groups derived therefrom for example maleic acid.

WO 2018/228840 A1, on the other hand, discloses an improved asphalt composition showing improved physical properties in terms of being more constant over a range of temperatures, said asphalt composition being obtained by a process involving the mixing of asphalt with a thermosetting reactive compound and stirring the mixture for at least 2.5 hours.

EP application number 19198042.4 discloses a process for the preparation of an asphalt mix composition using a specific sequence of short mixing steps in a temperature range of from 110 to 200°C.

Although considerable improvements have been achieved for asphalt compositions with regard to their physical properties, said advantages require increased efforts in reducing energy consumption during preparation and asphalting. In view thereof, there remains the need to provide improved methods for obtaining said materials in a highly effective manner, in particular with regard to energy-efficiency, workability during asphalting and asphalt mix performance.

### DETAILED DESCRIPTION

It was therefore an object of the present invention to provide an improved energy efficient process for the preparation of an asphalt mix composition displaying advantageous physical properties and high performance.

According to the present invention, the terms "asphalt", "bitumen", "asphalt binder", and "asphalt composition" are used equivalently. In general, asphalt is a colloidal material containing different molecular species classified into asphaltenes and maltenes.

Asphalt / bitumen / asphalt binder / asphalt composition may be unmodified or modified. Unmodified asphalt / bitumen / asphalt binder / asphalt composition or also called paving grade bitumen / paving grade asphalt may for example be a penetration grade (=pen grade) 50-70 or 70-100 (needle penetration determined according to DIN EN 1426). Modified asphalt compositions may for example be polymer modified bitumen (PmB). The respective polymer may be selected from the group consisting of thermoplastic elastomers, latex, thermoplastic polymers, thermosetting polymers, and mixtures of two or more thereof. A thermoplastic elastomer may for example be styrene butadiene elastomer (SBE), styrene butadiene styrene (SBS), or styrene butadiene rubber (SBR). An example of an SBS modified bitumen is a PmB 25/55-55 RC.

According to the present invention, the terms "reclaimed asphalt pavement" (also abbreviated as RAP), "recycled asphalt", "reclaimed asphalt", "reclaimed asphalt pavement material", and "reclaimed asphalt mix" are similarly used to describe a material that may also be described as "reprocessed pavement containing asphalt and aggregates".

According to the present invention, the term "granular material" is similarly used to describe a component that may also be described as an "aggregate" or as "aggregates". Further, in accordance with the present invention, a granular material or an aggregate may comprise one or more of gravel, sand, filler, and fine aggregates. Additional specific and/or preferred embodiments are disclosed herein in this regard.

According to the present invention, the terms "asphalt mix composition" and "asphalt mix" are used to describe a mixture of aggregates / granular material, reclaimed asphalt, any kind of additives (e.g. thermosetting reactive compounds, fibers, rejuvenators, reactive modifiers, etc.), and asphalt / bitumen / asphalt binder / asphalt compositions (modified or unmodified).

According to the present invention, the term "recovered asphalt" or "recovered bitumen" or "recovered asphalt binder" is used to described asphalt / bitumen which is extracted from asphalt mix compositions. The respective recovery procedure is described in the experimental section.

According to the present invention the term "homogenized" or "homogenization" is used to describe blending diverse elements into a mixture that is the same throughout meaning to make uniform in structure or composition throughout, for example by mixing.

Thus, it has surprisingly been found that as opposed to the teaching of the prior art, even at low temperatures during the preparation process a modification of the respective asphalt with a thermosetting reactive compound can be achieved leading after intensive mixing with a granular material such as sand or gravel to an asphalt mix composition with improved physical properties of the asphalt in terms of being more constant over a range of temperatures (i.e. the asphalt contained in such asphalt mix compositions shows an increased useful temperature interval (UTI), a reduced non-recoverable creep compliance (Jnr), an increased elastic response, an increased softening point, as well as a decreased needle penetration, and thus provides a better performance of the according asphalt mix composition in terms of e.g. rutting and fatigue resistance, low temperature resistance, and enhanced road durability across a broadened temperature range). It has thus quite surprisingly been found that an asphalt mix composition having advantageous properties may be obtained using a specific sequence of comparatively short mixing steps combined with a low temperature treatment, such as to not only afford considerable savings in time and energy during the preparation process, but furthermore leading to modified asphalt mixes showing a high workability at reduced laydown temperatures bearing further advantages over the benchmark asphalt mixes known in the prior art, for example SBS modified bitumen, namely (i) reduced asphalt mixing temperatures leading to reduced CO₂ emissions since aggregates, reclaimed asphalt and asphalt binders are heated to lower temperatures, (ii) reduced bitumen emissions (aerosols and fumes) at the construction site during asphalt laydown and iii) shorter cool-down periods after pavement.

Without being bound by this theory we believe that the excellent workability even with high amounts of reclaimed asphalt content is attributed to the fact that the thermosetting reactive compound even at the comparable low process temperatures reactively crosslinks aged bitumen, stemming from reclaimed asphalt, and unaged unmodified paving grade bitumen. Due to oxidative aging, aged bitumen features a higher density of functional groups (generated by oxidation). Due to the nature of the reactive modifier, functional groups both accessible in aged and unaged bitumen act as anchor groups for reactive crosslinking and thus for chemically interlinking aged and unaged bitumen.

Therefore, the present invention relates to a process for the preparation of an asphalt mix composition, said process comprising:
(1) providing an asphalt composition and heating said composition to a temperature in the range of from 150 to 175 °C;
(2) providing a granular material and heating said material to a temperature in the range of from 130 to 170 °C;
(3) providing one or more thermosetting reactive compounds;
(4) adding the one or more thermosetting reactive compounds provided in (3) to the asphalt composition obtained in (1) and homogenizing the mixture for a duration in the range of from 2 to 180 s;
(5) adding the mixture obtained in (4) to the granular material obtained in (2) and homogeniz ing the slurry for a duration in the range of from 5 to 180 s, wherein the temperature of the resulting asphalt mix composition is in the range of from 130 to 155°C.

It is preferred that the temperature of the homogenized slurry obtained in (5), the resulting asphalt mix composition, is in the range of from 132 to 155°C, more preferably of from 135 to 152°C, more preferably of from 135 to 150°C, more preferably of from 135 to 148°C, more preferably of from 135 to 147°C, and more preferably of from 135 to 145°C.

It is preferred that the total duration starting with the addition of the thermosetting reactive compound in (4) until the subsequent obtainment of the homogenized slurry in (5) is in the range of from 10 s to 7 d, more preferably of from 10 s to 3 d, more preferably of from 15 s to 1 d, more preferably of from 15 s to 12 h, more preferably of from 20 s to 6 h, more preferably of from 20 s to 1 h, more preferably of from 25 s to 30 min, more preferably of from 25 s to 15 min, more preferably of from 30 s to 6 min, more preferably of from 30 s to 3 min, more preferably of from 35 s to 2 min, more preferably of from 35 s to 90 s, more preferably of from 40 s to 85 s, more preferably of from 45 s to 70 s, and more preferably of from 50 s to 60 s.

It is preferred that after (4) and prior to (5) the mixture obtained in (4) is stored at a temperature in the range of from 60 to 175°C, more preferably of from 70 to 170°C, more preferably of from 80 to 168°C, more preferably of from 90 to 165°C, more preferably of from 110 to 165°C, more preferably of from 130 to 163°C, and more preferably of from 150 to 160°C.

It is preferred that after (4) and prior to (5) the mixture obtained in (4) is stored for a duration in the range of from 0 s to 7 d, more preferably of from 5 s to 3 d, more preferably of from 10 s to 1 d, more preferably of from 15 s to 12 h, more preferably of from 20 s to 6 h, more preferably of from 25 s to 1 h, more preferably of from 30 s to 30 min, more preferably of from 35 s to 15 min, more preferably of from 40 s to 6 min, more preferably of from 45 s to 3 min, more preferably of from 50 s to 2 min, more preferably of from 55 s to 90 s, and more preferably of from 60 s to 70 s.

It is preferred that after (4) and prior to (5) the mixture obtained in (4) is subject to mixing at a mixing rate of 100 rpm or less, more preferably of 50 rpm or less, more preferably of 25 rpm or less, more preferably of 20 rpm or less, more preferably of 15 rpm or less, more preferably of 10 rpm or less, more preferably of 5 rpm or less, and more preferably of 3 rpm or less.

It is preferred that after (4) and prior to (5) the mixture obtained in (4) is not subject to mixing, wherein more preferably after (4) and prior to (5) the mixture obtained in (4) is not subject to homogenization.

Alternatively, it is preferred that the mixture obtained in (4) is directly processed in (5).

It is preferred that in (1) the asphalt composition is heated to a temperature in the range of from 150 to 172 °C, more preferably of from 155 to 172 °C, more preferably of from 155 to 170 °C, more preferably of from 158 to 170 °C, and more preferably of from 160 to 170 °C.

It is preferred that in (2) the granular material is heated to a temperature in the range of from 135 to 170 °C, more preferably of from 140 to 170 °C, more preferably of from 145 to 170 °C, more preferably of from 150 to 170 °C, and more preferably of from 155 to 168 °C.

It is preferred that homogenization in (5) is conducted at a temperature in the range of from 135 to 155 °C, more preferably of from 138 to 155 °C, more preferably of from 140 to 155 °C, more preferably of from 140 to 152 °C, and more preferably of from 145 to 150 °C.

Generally, an asphalt composition used in the present invention can be any asphalt known and generally covers any bituminous compound. It can be any of the materials referred to as bitumen or asphalt. In particular, it is preferred within the context of the present invention that the term "asphalt" or "asphalt composition" as used herein refers to the definition contained in ASTM D8-02, wherein an asphalt is defined as a dark brown to black cementitious material in which the predominating constituents are bitumens which occur in nature or are obtained in petroleum processing.

It is preferred that the asphalt composition provided in (1) has a needle penetration selected from the list consisting of 20-30, 30-45, 35-50, 40-60, 50-70, 70-100, 100-150, 160-220, and 250-330 or performance grades of 52-16, 52-22, 52-28, 52-34, 52-40, 58-16, 58-22, 58-28, 58-34, 58-40, 64-16, 64-22, 64-28, 64-34, 64-40, 70-16, 70-22, 70-28, 70-34, 70-40, 76-16, 76-22, 76-28, 76-34, 76-40, more preferably the asphalt composition provided in (1) has a needle penetration selected from the list consisting of 30-45, 35-50, 40-60, 50-70, 70-100, 100-150, and 160-220 or performance grades of 52-16, 52-22, 52-28, 52-34, 52-40, 58-16, 58-22, 58-28, 58-34, 58-40, 64-16, 64-22, 64-28, 64-34, 70-16, 70-22, 70-28, 76-16, 76-22, more preferably the asphalt composition provided in (1) has a needle penetration selected from the list consisting of 40-60, 50-70, 70-100, and 100-150 or performance grades of 52-16, 52-22, 52-28, 52-34, 52-40, 58-16, 58-22, 58-28, 58-34, 64-16, 64-22, 64-28, 70-16, 70-22, 76-16, 76-22, wherein more preferably the asphalt composition provided in (1) has a needle penetration of 50-70 or 70-100, wherein the needle penetration is determined according to DIN EN 1426.

In the case where the asphalt composition provided in (1) comprises modified bitumen, it is preferred that the bitumen is modified using one or more compound selected from the group consisting of chemical modifiers (e.g. organometallic compounds, sulfur, phosphoric acid (PA), polyphosphoric acid (PPA), sulfonic acid, sulfuric acid, carboxylic anhydrides, acid esters, dibenzoyl peroxide, silanes, organic and inorganic sulfides urea), recycled materials (e.g. crumb rubber, plastics), fibers (e.g. lignin, cellulose, glass fibers, alumino magnesium silicate, polyester, polypropylene), adhesion improvers (e.g. organic amines, amides), natural asphalt (e.g. Trinidad lake asphalt (TLA), gilsonite, rock asphalt), anti-oxidants (e.g. phenols, organo-zinc compounds, organo-lead compounds), fillers (e.g. carbon black, hydrated lime, lime, fly ash), viscosity modifiers (e.g. flux oils, waxes), reactive polymers (e.g. random terpolymer of ethylene, acrylic ester and glycidyl methacrylate, maleic anhydride-grafted styrene-butadiene-styrene copolymer), and mixtures of two or more thereof.

It is preferred that the one or more thermosetting reactive compounds in (3) comprise one or more compounds selected from the group consisting of polyisocyanates, epoxy resins, melamine formaldehyde resins, and mixtures of two or more thereof, preferably from the group consisting of aliphatic polyisocyanates, araliphatic polyisocyanates, aromatic polyisocyanates, and mixtures of two or more thereof, more preferably from the group consisting of aromatic diisocyanates, oligomeric aromatic polyisocyanates, and mixtures of two or more thereof, wherein more preferably the one or more thermosetting reactive compounds comprise a mixture of one or more aromatic diisocyanates with one or more oligomeric aromatic polyisocyanates, wherein more preferably the one or more thermosetting reactive compounds consist of a mixture of one or more aromatic diisocyanates with one or more oligomeric aromatic polyisocyanates.

According to the present invention, it is preferred that the polyisocyanates are the aliphatic, cycloaliphatic, araliphatic and more preferably the aromatic polyvalent isocyanates known in the art. Such polyfunctional isocyanates are known and can be produced by methods known per se. The polyfunctional isocyanates can also be used in particular as mixtures, so that the polyisocyanates in this case contains various polyfunctional isocyanates. According to the present invention, a polyisocyanate is a polyfunctional isocyanate having two (hereafter called diisocyanates) or more than two isocyanate groups per molecule. Furthermore, according to the present invention, the term "oligomeric polyisocyanates" and more specifically "oligomeric aromatic polyisocyanates" designate polyfunctional isocyanates having three or more than three isocyanate groups per molecule.

In particular, it is preferred according to the present invention that the polyisocyanates are selected from the group consisiting of alkylenediisocyanates with 4 to 12 carbon atoms in the alkylene radical, such as 1,12-dodecanediioscyanate, 2-ethyltetramethylenediisocyanate-1,4,2-methylpentamethylenediisocyanate-1,5, tetramethylenediisocyanate-1,4, and preferably hexamethylenediisocyanate-1,6; cycloaliphatic diisocyanates such as cyclohexane-1,3- and 1,4-diisocyanate and any mixtures of these isomers, 1-isocyanato-3,3,5-trimethyl-5-isocyanatomethylcyclohexane (IPDI), 2,4- and 2,6-hexahydrotoluene diisocyanate and the corresponding isomer mixtures, 4,4'-, 2,2'- and 2,4'-dicyclohexylmethane diisocyanate and the corresponding isomer mixtures, and preferably aromatic polyisocyanates, such as 2,4- and 2,6-toluene diisocyanate and the corresponding isomer mixtures, 4,4'-, 2,4'- and 2,2'-diphenylmethane diisocyanate and the corresponding isomer mixtures, mixtures of 4,4'- and 2,4'-diphenylmethane diisocyanates, polyphenylpolymethylene polyisocyanates, mixtures of 4,4'-, 2,4'- and 2,2'-diphenylmethane diisocyanates and polyphenylpolyethylene polyisocyanates and mixtures of MDI and toluene diisocyanates.

Particularly suitable are 2,2'-, 2,4'- and/or 4,4'-diphenylmethane diisocyanate, 1,5-naphthylene diisocyanate (NDI), 2,4- and/or 2,6-toluene diisocyanate (TDI), 3,3'-dimethyl diphenyl diisocyanate, 1,2-diphenylethane diisocyanate and/or p-phenylene diisocyanate (PPDI), tri-, tetra-, penta-, hexa-, hepta- and/or octamethyl diisocyanate, 2-methylpentamethylene-1,5-diisocyanate, 2-ethylbutylene-1,4-diisocyanate, pentamethylene-1,5-diisocyanate, butylene-1,4-diisocyanate, 1-isocyanato-3,3,5-trimethyl-5-iso-cyanatomethyl-cyclohexane (isophorone diisocyanate, IPDI), 1,4- and/or 1,3-Bis(isocyanatomethyl)cyclohexane (HXDI), 1,4-cyclohexane diisocyanate, 1-methyl-2,4- and/or -2,6-cyclohexane diisocyanate and 4,4'-, 2,4'- and/or 2,2'-dicyclohexylmethane diisocyanate.

Modified polyisocyanates, i.e. products obtained by the chemical reaction of organic polyisocyanates and containing at least two reactive isocyanate groups per molecule, are also preferably used. Particularly mentioned are polyisocyanates containing ester, urea, biuret, allophanate, carbodiimide, isocyanurate, uretdione, carbamate and/or urethane groups, often also together with unreacted polyisocyanates.

According to the present invention, the polyisocyanates particularly preferably contain 2,2'-MDI or 2,4'-MDI or 4,4'-MDI or mixtures of at least two of these isocyanates (also referred to as monomeric diphenylmethane or MMDI) or oligomeric MDI consisting of higher-core homologues of the MDI which have at least 3 aromatic nuclei and a functionality of at least 3, or mixtures of two or more of the above-mentioned diphenylmethane diisocyanates, or crude MDI obtained in the preparation of MDI, or preferably mixtures of at least one higher-core homologues of the MDI and at least one of the low molecular weight MDI derivatives 2,2'-MDI, 2,4'-MDI or 4,4'-MDI (mixture is also referred to as polymeric MDI). The average functionality of a polyisocyanate containing polymeric MDI may vary in the range from about 2.2 to about 4, in particular from 2.4 to 3.8 and in particular from 2.6 to 3.0.

Polyfunctional isocyanates or mixtures of several polyfunctional isocyanates based on MDI are known and are commercially available, for example from BASF SE.
According to the present invention, the one or more thermosetting reactive compounds preferably contain at least 70, particularly preferably at least 90 and in particular 100 wt.%, based on the total weight of the one or more thermosetting reactive compounds, of one or more isocyanates selected from the group consisting of 2,2'-MDI, 2,4'-MDI, 4,4'-MDI and higher homologues of the MDI. The content of higher homologues with more than 3 rings is preferably at least 20% by weight, particularly preferably greater than 30% to less than 80% by weight, based on the total weight of the one or more thermosetting reactive compounds.

The viscosity of the one or more thermosetting reactive compounds used in the inventive process can vary over a wide range. It is preferred that the one or more thermosetting reactive compounds have a viscosity of 100 to 3000 mPa*s, especially preferred from 100 to 1000 mPa*s, especially preferred from 100 to 600 mPa*s, more especially from 200 to 600 mPa*s and especially from 400 to 600 mPa*s at 25 °C. The viscosity of the one or more thermosetting reactive compounds may vary within a wide range

In the case where the one or more thermosetting reactive compounds comprise aliphatic polyisocyanates, it is preferred that the aliphatic polyisocyanates comprise one or more compounds selected from the group consisting of alkylenediisocyanates with 4 to 12 carbon atoms in the alkylene radical and mixtures of two or more thereof, 1,12-dodecanediioscyanate, 2-ethyltetramethylenediisocyanate-1,4, 2-methylpentamethylenediisocyanate-1,5, tetramethylenediisocyanate-1,4, hexamethylenediisocyanate-1,6, trimethyl diisocyanate, tetramethyl diisocyanate, pentamethyl diisocyanate, hexamethyl diisocyanate, heptamethyl diisocyanate, octamethyl diisocyanate, 2-methylpentamethylene-1,5-diisocyanate, 2-ethylbutylene-1,4-diisocyanate, pentamethylene-1,5-diisocyanate, butylene-1,4-diisocyanate, preferably from the group consisting of trimethyl diisocyanate, tetramethyl diisocyanate, pentamethyl diisocyanate, hexamethyl diisocyanate, heptamethyl diisocyanate, octamethyl diisocyanate, 2-methylpentamethylene-1,5-diisocyanate, 2-ethylbutylene-1,4-diisocyanate, pentamethylene-1,5-diisocyanate, butylene-1,4-diisocyanate, and mixtures of two or more thereof, wherein more preferably the aliphatic polyisocyanates comprise hexamethylenediisocyanate-1,6, wherein more preferably the aliphatic polyisocyanates consist of hexamethylenediisocyanate-1,6.

In the case where the one or more thermosetting reactive compounds comprise cycloaliphatic polyisocyanates, it is preferred that the aliphatic polyisocyanates comprise one or more cycloaliphatic compounds selected from the group consisting of 1-isocyanato-3,3,5-trimethyl-5-isocyanatomethyl-cyclohexane (isophorone diisocyanate, IPDI), 1,4-Bis(isocyanatomethyl)cyclohexane and/or 1,3-Bis(isocyanatomethyl)cyclohexane (HXDI), 1,4-cyclohexane diisocyanate, 1-methyl-2,4- and/or -2,6-cyclohexane diisocyanate and 4,4'-dicyclohexylmethane diisocyanate, 2,2'-dicyclohexylmethane diisocyanate, 2,4'-dicyclohexylmethane diisocyanate, cyclohexane-1,3- diisocyanate, cyclohexane-1,4- diisocyanate, 2,4- hexahydrotoluene diisocyanate, 2,6-hexahydrotoluene diisocyanate, 4,4'-dicyclohexylmethane diisocyanate, 2,2'-dicyclohexylmethane diisocyanate, 2,4'-dicyclohexylmethane diisocyanate, and mixtures of two or more thereof, preferably from the group consisting of 1-isocyanato-3,3,5-trimethyl-5-iso-cyanatomethyl-cyclohexane (isophorone diisocyanate, IPDI), 1,4-Bis(isocyanatomethyl)cyclohexane and/or 1,3-Bis(isocyanatomethyl)cyclohexane (HXDI), 1,4-cyclohexane diisocyanate, 1-methyl-2,4- and/or -2,6-cyclohexane diisocyanate and 4,4'-dicyclohexylmethane diisocyanate, 2,2'-dicyclohexylmethane diisocyanate, 2,4'-dicyclohexylmethane diisocyanate, and mixtures of two or more thereof.

In the case where the one or more thermosetting reactive compounds comprise aromatic polyisocyanates, it is preferred that the aromatic polyisocyanates, and preferably the aromatic diisocyanates, comprise one or more compounds selected from the group consisting of 2,4-toluene diisocyanate, 2,6-toluene diisocyanate, 4,4'-diphenylmethane diisocyanate, 2,4'-diphenylmethane diisocyanate, 2,2'-diphenylmethane diisocyanate, 1,5-naphthylene diisocyanate (NDI), 3,3'-dimethyl diphenyl diisocyanate, 1,2-diphenylethane diisocyanate, p-phenylene diisocyanate (PPDI), and mixtures of two or more thereof, preferably from the group consisting of 2,4- toluene diisocyanate (2,4-TDI), 2,6-toluene diisocyanate (2,6-TDI), 4,4'-diphenylmethane diisocyanate (4,4'-MDI), 2,4'-diphenylmethane diisocyanate (2,4'-MDI), 2,2'-diphenylmethane diisocyanate (2,2'-MDI), crude MDI obtained in the preparation of MDI, and mixtures of two or more thereof, more preferably from the group consisting of 4,4'-diphenylmethane diisocyanate, 2,4'-diphenylmethane diisocyanate, 2,2'-diphenylmethane diisocyanate, and mixtures of two or more thereof (mixtures of the isomers 4,4'-, 2,4'- and 2,2'-diphenylmethane diisocyanate are also referred to as monomeric diphenylmethane or MMDI), wherein more preferably the aromatic polyisocyanates, and preferably the aromatic diisocyanates, comprise a mixture of 4,4'-diphenylmethane diisocyanate, 2,4'-diphenylmethane diisocyanate, and 2,2'-diphenylmethane diisocyanate, wherein more preferably the aromatic polyisocyanates, and preferably the aromatic diisocyanates, consist of a mixture of 4,4'-diphenylmethane diisocyanate, 2,4'-diphenylmethane diisocyanate, and 2,2'-diphenylmethane diisocyanate.

In the case where the one or more thermosetting reactive compounds comprise polyisocyanates, it is preferred that the polyisocyanates comprise modified polyisocyanates, preferably modified organic polyisocyanates, and more preferably modified organic polyisocyanates containing one or more ester, urea, biuret, allophanate, carbodiimide, isocyanurate, uretdione, carbamate and/or urethane groups.

In the case where the one or more thermosetting reactive compounds comprise oligomeric aromatic polyisocyanates, it is preferred that the oligomeric aromatic polyisocyanates comprise one or more compounds selected from the group consisting of polyphenylpolymethylene polyisocyanates, polyphenylpolyethylene polyisocyanates, and mixtures of two or more thereof, preferably from the group consisting of one or more polymethylene polyphenylisocyanates, polyethylene polyphenylisocyanates, and mixtures of two or more thereof, wherein more preferably the aromatic polyisocyanates comprise one or more polymethylene polyphenylisocyanates, wherein more preferably the aromatic polyisocyanates consist of one or more polymethylene polyphenylisocyanates.

In the case where the one or more thermosetting reactive compounds comprise oligomeric aromatic polyisocyanates, it is preferred that the oligomeric aromatic polyisocyanates comprise one or more oligomers consisting of higher-core homologues of one or more of 4,4'-diphenylmethane diisocyanate, 2,4'-diphenylmethane diisocyanate, and 2,2'-diphenylmethane diisocyanate, wherein the higher-core homologues have at least 3 aromatic nuclei and a functionality of at least 3.

In the case where the one or more thermosetting reactive compounds comprise one or more compounds selected from the group consisting of polyisocyanates, epoxy resins, melamine formaldehyde resins, and mixtures of two or more thereof, it is preferred that the one or more thermosetting reactive compounds is polymeric MDI and the total amount of 4,4'-MDI in the polymeric MDI is in the range of from 26 to 98 wt.-% based on 100 wt.-% of the one or more thermosetting reactive compounds, preferably in the range of from 30 to 95 wt.-%, and more preferably in the range of from 35 to 92 wt.-%.

In the case where the one or more thermosetting reactive compounds comprise one or more compounds selected from the group consisting of polyisocyanates, epoxy resins, melamine formaldehyde resins, and mixtures of two or more thereof, it is preferred that the one or more thermosetting reactive compounds is polymeric MDI and the 2 rings content of polymeric MDI is in the range of from 20 to 62%, more preferably in the range of from 26 to 48 wt.-%, and most preferably in the range of from 26 to 48% based on 100 wt.-% of the polymeric MDI.
In the case where the one or more thermosetting reactive compounds comprise one or more compounds selected from the group consisting of polyisocyanates, epoxy resins, melamine formaldehyde resins, and mixtures of two or more thereof, it is preferred that the one or more thermosetting reactive compounds, and preferably the total of the polyisocyanates contained therein, have an average isocyanate functionality of from 2.1 to 3.5, preferably of from 2.3 to 3.2, more preferably of from 2.4 to 3, more preferably of from 2.5 to 2.9, and more preferably of from 2.6 to 2.8.

It is preferred that the one or more thermosetting reactive compounds have an iron content in the range of from 1 to 100 wppm, preferably of from 1 to 80 wppm, more preferably of from 1 to 60 wppm, more preferably of from 1 to 40 wppm, more preferably of from 1 to 20 wppm, more preferably of from 1 to 10 wppm, and more preferably of from 1 to 5 wppm.

It is preferred that the one or more thermosetting reactive compounds display a viscosity in the range of from 100 to 3000 mPa*s, preferably of from 100 to 1000 mPa*s, more preferably of from 100 to 600 mPa*s, more preferably of from 200 to 600 mPa*s, and more preferably of from 400 to 600 mPa*s, wherein the viscosity is the viscosity measured at 25 °C.

In the case where the one or more thermosetting reactive compounds comprise one or more epoxy resins, it is preferred that the epoxy resins comprise one or more compounds selected from the group of aromatic epoxy resins, cycloaliphatic epoxy resins, and mixtures of two or more thereof, more preferably one or more compounds selected from the group consisting of bisphenol A bisglycidyl ether (DGEBA), bisphenol F bisglycidyl ether, ring-hydrogenated bisphenol A bisglycidyl ether, ring-hydrogenated bisphenol F bisglycidyl ether, bisphenol S bisglycidyl ether (DGEBS), tetraglycidylmethylenedianiline (TGMDA), epoxy novolaks (the reaction products from epichlorohydrin and phenolic resins (novolak)), 3,4-epoxycyclohexylmethyl, 3,4-epoxycyclohexanecarboxylate, diglycidyl hexahydrophthalate, and mixtures of two or more thereof, wherein more preferably the epoxy resins comprise bisphenol A bisglycidyl ether and/or bisphenol F bisglycidyl ether, wherein more preferably the epoxy resins consist of bisphenol A bisglycidyl ether and/or bisphenol F bisglycidyl ether.

In the case where the one or more thermosetting reactive compounds comprise one or more melamine formaldehyde resins, it is preferred that the melamine formaldehyde resins comprise an aqueous melamine resin mixture with a resin content in the range of 50 to 70 weight-% based on 100 weight-% of the aqueous melamine resin mixture, with melamine and formaldehyde present in the resin in a molar ratio of from 1:3 to 1:1, preferably of from 1:1.3 to 1 :2.0, and more preferably of from 1:1.5 to 1:1.7.

Further in the case where the one or more thermosetting reactive compounds comprise one or more melamine formaldehyde resins, it is preferred that the melamine formaldehyde resins contain 1 to 10 weight-% of polyvalent alcohols, more preferably 3 to 6 weight-% of polyvalent alcohols, more preferably 3 to 6 weight-% of C₂ to C₁₂ diols, more preferably 3 to 6 weight-% of one or more compounds selected from the group consisting of diethylene glycol, propylene glycol, butylene glycol, pentane diol, hexane diol, and mixtures of two or more thereof, and more preferably 3 to 6 weight-% of diethylene glycol.

Further in the case where the one or more thermosetting reactive compounds comprise one or more melamine formaldehyde resins, it is preferred that the melamine formaldehyde resins contain 0 to 8 weight-% of caprolactam and 0.5 to 10 weight-% of 2-(2-phenoxyethoxy)-ethanol and/or polyethylene glycol with an average molecular mass of 200 to 1500 each based on 100 weight-% of the melamine formaldehyde resins.

It is preferred that in (4) the mixture is homogenized for a duration in the range of from 3 to 120 s, more preferably of from 4 to 90 s, more preferably of from 6 to 60 s, more preferably of from 8 to 40 s, more preferably of from 10 to 30 s, more preferably of from 12 to 25 s, and more preferably of from 15 to 20 s.

It is preferred that in (5) the slurry is homogenized for a duration in the range of from 10 to 120 s, more preferably of from 15 to 100 s, more preferably of from 20 to 80 s, more preferably of from 30 to 60 s, and more preferably of from 40 to 50 s.

It is preferred that the weight ratio of the total amount of the one or more thermosetting reactive compounds to the asphalt composition is in the range of from 0.1 : 99.9 to 25 : 75, more preferably of from 0.3 : 99.7 to 15 : 85, more preferably of from 0.5 : 99.5 to 10 : 90, more preferably of from 0.8 : 99.2 to 7 : 93, more preferably of from 1 : 99 to 5 : 95, more preferably of from 1.3 : 98.7 to 4 : 96, more preferably of from 1.5 : 98.5 to 3.5 : 96.5, more preferably of from 1.8 : 98.2 to 3.2 : 96.8, more preferably of from 2 : 98 to 3 : 97, more preferably of from 2.2 : 97.8 to 2.8 : 97.2, and more preferably of from 2.4 : 97.6 to 2.6 : 97.4.

It is preferred that the weight ratio of the mixture obtained in (4) to the granular material obtained in (2) is in the range of from 0.5 : 99.5 to 25 : 75, more preferably of from 1 : 99 to 20 : 80, more preferably of from 1.5 : 98.5 to 15 : 85, more preferably of from 2 : 98 to 10 : 90, more preferably of from 2.5 : 97.5 to 7 : 93, more preferably of from 3 : 97 to 5 : 95, and more preferably of from 3.5 : 96.5 to 4.5 : 95.5.

It is preferred that the granular material provided in (2) comprises one or more granular materials selected from the group consisting of gravel, reclaimed asphalt pavement, sand, one or more filler materials, and mixtures of two or more thereof, more preferably from the group consisting of limestone, basanite, diabase, reclaimed asphalt pavement, and mixtures of two or more thereof, and more preferably from the group consisting of limestone, basanite, diabase, reclaimed asphalt pavement, and mixtures of two or more thereof.

It is preferred that the asphalt composition provided in (1) comprises one or more additives, more preferably one or more fiber materials and/or one or more rejuvenators. It is particularly preferred that the asphalt composition provided in (1) comprises cellulose fibers. According to the present invention, fiber materials, rejuvenators, and cellulose fibers are considered as additives.

In the case where the asphalt composition provided in (1) comprises one or more additives, it is preferred that the asphalt composition provided in (1) comprises 10 weight-% or less of the one or more additives, based on 100 weight-% of the asphalt composition, preferably 5 weight-% or less, more preferably 3 weight-% or less, more preferably 2 weight-% or less, more preferably 1 weight-% or less, more preferably 0.5 weight-% or less, and more preferably 0.1 weight-% or less of the one or more additives, based on 100 weight-% of the asphalt composition.

It is preferred that the granular material provided in (2) comprises from 5 to 100 weight-% of reclaimed asphalt pavement, based on 100 weight-% of the granular material, wherein more preferably the granular material comprises from 10 to 90 weight-%, more preferably from 15 to 80 weight-%, more preferably from 20 to 70 weight-%, more preferably from 25 to 60 weight-%, more preferably from 30 to 50 weight-%, and more preferably from 35 to 45 weight-% of reclaimed asphalt pavement, based on 100 weight-% of the granular material.

No particular restriction applies to the grain size of the granular material provided in (2). It is preferred that the granular material provided in (2) displays a grain size in the range of from 0.1 to 70 mm, more preferably of from 0.3 to 50 mm, more preferably of from 0.5 to 40 mm, more preferably of from 1 to 30 mm, more preferably of from 3 to 25 mm, more preferably of from 5 to 20 mm, more preferably of from 7 to 15 mm, and more preferably of from 8 to 11 mm.

It is preferred that addition in (4) is achieved by injection of at least a portion of the one or more thermosetting reactive compounds into at least a portion of the asphalt composition. It is particularly preferred that the injection is achieved with the aid of a dosage pump.

It is preferred that addition in (4) is conducted in a receiver tank, more preferably in a weighted receiver tank.

In the case where addition in (4) is conducted in a receiver tank or in a weighted receiver tank, it is preferred that the asphalt composition obtained in (1) is added to the receiver tank or to the weighted receiver tank prior to the addition of the one or more thermosetting reactive compounds.

It is preferred that homogenization in (4) is achieved with the aid of one or more dynamic mixing elements, more preferably with the aid of one or more circulation pumps and/or high shear mixers and/or one or more stirrers and/or one or more screws, more preferably with the aid of one or more stirrers.

It is preferred that homogenization in (4) is achieved with the aid of one or more static mixing elements, more preferably with the aid of one or more nozzles and/or Sulzer mixers and/or Kenics mixers.
It is preferred that homogenization in (4) is conducted at least in part in a mixing unit, more preferably in a weighted stirred vessel.

It is preferred that homogenization in (4) is achieved by mixing. In the case where homogenization in (4) is achieved by mixing, it is preferred that the mixing rate is in the range of from 30 to 12,000 rpm, more preferably of from 50 to 8,000 rpm, more preferably of from 100 to 5,000 rpm, more preferably of from 300 to 4,000 rpm, more preferably of from 500 to 3,000 rpm, more preferably of from 800 to 2,500 rpm, more preferably of from 1,000 to 2,000 rpm, more preferably of from 1,200 to 1,800 rpm, and more preferably of from 1,400 to 1,600 rpm.

It is preferred that addition in (5) is achieved by injection of at least a portion of the mixture obtained in (4) into at least a portion of granular material obtained in (2). It is particularly preferred that addition in (5) is achieved by injection of at least a portion of the mixture obtained in (4) into at least a portion of granular material obtained in (2) with the aid of a dosage pump.

It is preferred that homogenization in (5) is achieved by with the aid of one or more dynamic mixing elements, more preferably with the aid of one or more stirrers and/or one or more screws, more preferably with the aid of a double shaft compulsory mixer (twin-shaft pugmill).

It is preferred that homogenization in (5) is conducted in a mixing device. It is particularly preferred that the mixing device is part of an asphalt mixing plant.

In the case where homogenization in (5) is conducted in a mixing device, it is preferred that the granular material obtained in (2) is added to the mixing device prior to the addition of the mixture obtained in (4).

It is preferred that in (4), addition and homogenization are conducted simultaneously.

It is preferred that in (5), addition and homogenization are conducted simultaneously.

It is preferred that (4) and/or (5), more preferably (4) and (5), are conducted under an oxygen containing atmosphere, more preferably under an atmosphere containing oxygen in an amount from 1 to 21 volume-%, more preferably from 5 to 21 volume-%, and more preferably from 10 to 21 volume-%. It is particularly preferred that (4) and/or (5), more preferably (4) and (5), are conducted under air.

It is preferred that (4) and/or (5), more preferably (4) and (5), are conducted as a batch process or as a continuous process. It is particularly preferred that (4) and/or (5), more preferably (4) and (5), are conducted as a continuous process.

Further, the present invention relates to an asphalt mix composition obtained or obtainable according to the process of any one of the embodiments disclosed herein.

Further, the present invention relates to a use of an asphalt mix composition according to any one of the embodiments disclosed herein for pavement applications.

Yet further the present invention relates to a process for asphalting at reduced laydown temperatures comprising:
(1) Loading a vehicle designed for asphalt mix transportation from the silo of an asphalt mix ing plant with the asphalt mix composition obtained according to the process of any one of claims 1 to 13
(2) Feeding the paver at the construction site with said asphalt mix composition
(3) Asphalt laydown by the paver and subsequent compaction by a road roller wherein the temperature during laydown is in the range of from 110°C to 155 °C.

Generally, the transportation of an asphalt mix composition from an asphalt mixing plant to a construction site, the filling of a paver and the compaction by a road roller can be performed on any suitable way and is well known in the state of the art.

Generally, the laydown temperature has a large impact on the workability of the respective asphalt mix composition and the emission of bitumen aerosols and fumes. Generally during asphalting laydown, asphalt mix compositions prepared at temperatures above 160°C are used. According to the present invention the term "reduced laydown temperature" means asphalting at a laydown temperature of 155°C and below, with an asphalt mix composition produced in a temperature range of from 130°C to 155°C.

It is preferred that the temperature during laydown is in the range of from 115 to 155°C, more preferably of from 120 to 152°C, more preferably of from 125 to 150°C, more preferably of from 125 to 148°C, more preferably of from 130 to 148°C, and more preferably of from 135 to 145°C.

It is preferred that the emission of bitumen aerosols and fumes during asphalting are in the range of from 0.2 to 10 mg/m³, more preferably of from 0.2 to 9 mg/m³, more preferably of from 0.2 to 8.5 mg/m³, more preferably of from 0.2 to 8.3 mg/m³, more preferably of from 0.2 to 8 mg/m³ and more preferably of from 0.2 to 7 mg/m³.

The present invention is further illustrated by the following examples and reference examples.

### EXPERIMENTAL SECTION

Characterization methods

### Softening Point DIN EN 1427

Two horizontal disks of bitumen, cast in shouldered brass rings, are heated at a controlled rate in a liquid bath while each supports a steel ball. The softening point is reported as the mean of the temperatures at which the two disks soften enough to allow each ball, enveloped in bitumen, to fall a distance of 25 ± 0.4 mm.

### Dynamic Shear Rheometer (DSR) DIN EN 14770 - ASTM D7175

A dynamic shear rheometer test system consists of parallel plates, a means for controlling the temperature of the test specimen, a loading device, and a control and data acquisition system.

### Temperature Sweep DIN EN 14770

This test has the objective of measuring the complex shear modulus and phase angle of asphalt binders. The test consists in pressing an 8 or 25 mm diameter test specimen between parallel metal plates at a defined frequency and temperature. One of the parallel plates is oscillated with respect to the other at, in this case, 1.59 Hz and angular deflection amplitudes. The required amplitudes must be selected so that the testing is within the region of linear behavior. This is repeated at 30, 40, 50, 60, 70, 80 and 90 °C.

### Multiple Stress Creep Recovery Test (MSCRT) DIN EN 16659 - ASTM D7405

This test method is used to determine the presence of elastic response in an asphalt binder under shear creep and recover at two stress level (0.1 and 3.2 kPa) and at a specified temperature (60 °C). This test uses the DSR to load a 25 mm at a constant stress for 1 s, and then allowed to recover for 9 s. Ten creep and recovery cycles are run at 0.100 kPa creep stress followed by ten cycles at 3.200 kPa creep stress.

### Bitumen emission measurements (aerosols and fumes) method 6305-1

Aerosols and fumes during asphalt laydown were determined according to IFA (Institut für Arbeitsschutz der Deutschen Gesetzlichen Unfallversicherung) method 6305-1. The limit of determination is 0.2 mg/m³.

### Recovery of asphalt binder from asphalt mix compositions (recovered asphalt)

With the help of an asphalt analyzer, around 3 kg of asphalt mix composition is mixed with trichlorethylene. The aggregates are separated from the asphalt binder in a process that takes about 60 min. After the procedure is done, a solution of approximately 600 ml of trichlorethylene and bitumen are obtained. The solution is then distilled by partially immersing the rotating distillation flask of the rotary evaporator in a heated oil bath while the solution is subjected to a partial vacuum and a flow of air. This process has two phases. Phase 1 takes 60 min, is done at 90 degrees Celsius, under 40 kPa of pressure and a rotating speed of 75 rpm. Phase 2 is done at 160 degree under 2 kPa and a rotating speed of 75 rpm. Depending on the type of asphalt binder and the asphalt binder content of the asphalt mix, between 100-150 g of asphalt binder is recovered to then be subjected to testing as required.

### Example 1. Preparation of an asphalt mix composition in an asphalt mixing plant at low mixing temperatures (asphalt: modified with As20)

A batch asphalt mixing plant was equipped with a customized dosing system (heatable dosing line, dosing pump) which allows the dosage of a thermosetting reactive compound to the asphalt balance (stirred vessel) of the asphalt mixing plant. Furthermore, the asphalt balance was equipped with a stirrer which is engaged when i) a thermosetting reactive compound is dosed and ii) a minimum filling level of 20 kg asphalt is reached. The amount and speed of additive dosage as well as mixing is controlled via the process control system of the asphalt mixing plant.

Approximately 1000 t of an asphalt mix composition where the asphalt was modified with polymeric diphenylmethane diisocyanate having an average isocyanate functionality of 2.7 (designated in the following as "As20") were produced. The batch size is 4 tons. The granulometric curve of the asphalt mix was an AC 22 BS. The grain size distribution obtained for the produced asphalt mix is given in Table 1. The asphalt mix comprises 50 wt.% reclaimed asphalt (aggregates + asphalt) and 50 wt.% virgin material. The total asphalt content in the mixture of asphalt and aggregates was 4.7 wt.%, i.e. 188 kg asphalt per 4 t batch. 108 kg of 188 kg asphalt originate from reclaimed asphalt and the remaining 80 kg stem from the addition of unmodified (paving grade) asphalt pen 70/100 (a needle penetration of 7-10 mm according to DIN EN 1426). The employed amount of thermosetting reactive compound As20 was 3.76 kg, i.e. 2.0 wt.% referred to the total amount of employed asphalt (i.e. asphalt stemming from reclaimed asphalt + added unmodified (paving grade) asphalt pen 70/100).

Virgin granular material and reclaimed asphalt were preheated separately from each other and subsequently mixed together for 6 s (pre-mix). Heating power and mixing time were adjusted such that a temperature of 140-155 °C of the final asphalt mix composition can be achieved. 80 kg unmodified (paving grade) asphalt pen 70/100 was preheated to a temperature of 165-175 °C and weight into the stirring vessel (=asphalt balance). 3.76 kg of As20 is then added to the asphalt under stirring (1500 rpm) and the resulting mixture is then further stirred, wherein the dosage speed is set between 0.1 Us and 2.0 Us and the time of further stirring is set to 10 s (see Table 3). The resulting modified asphalt together with the premixed material (mixture of virgin aggregates and reclaimed asphalt having a temperature of ≤170 °C) were added to the mixing unit (double shaft compulsory mixer) and the resulting mixture is further mixed, wherein the total duration of further mixing is 20 s (see Table 3). The temperature of the resulting final asphalt mix composition at this stage of the process was determined to be 145-150 °C (see Table 3). Subsequently, the asphalt mix composition was released to the silo where it may be loaded onto a truck or stored for several hours. The mix is used for road pavements.

### Example 2. Asphalt laydown at 135-145 °C (asphalt: modified with As20)

The produced asphalt mix composition of example 1 was employed for road pavement (binder layer, AC 22 BS). The pavement was carried out with a Vögele paver Super 1800-3i. The temperature of the asphalt mix composition during laydown was in the range of 135 °C to 145 °C (see Table 6). The bitumen emissions (aerosols and fumes) during laydown were determined to be: 1.03 mg/m³, 1.30 mg/m³, and 6.67 mg/m³ (see Table 6). Moreover, samples of the asphalt mix composition were taken directly at the paver. Subsequently, the asphalt binder was extracted from the samples according to the procedure described above and subjected to various characterization methods. Results are given in Table 4.

Comparative example 1. Preparation of an asphalt mix composition in an asphalt mixing plant at typical mixing temperatures (asphalt: modified with SBS, i.e. with PmB 25/55-55 RC)

A batch asphalt mixing plant was equipped with a customized dosing system (heatable dosing line, dosing pump) which allows the dosage of a thermosetting reactive compound to the asphalt balance (stirred vessel) of the asphalt mixing plant. Furthermore, the asphalt balance was equipped with a stirrer which is engaged when i) a thermosetting reactive compound is dosed and ii) a minimum filling level of 20 kg asphalt is reached. The amount and speed of additive dosage as well as mixing is controlled via the process control system of the asphalt mixing plant. For comparative example 1, a thermosetting reactive compound was not dosed.

Approximately 805 t of an asphalt mix composition where the asphalt mix composition contained 2.1 wt.% SBS modified bitumen (PmB 25/55-55 RC) were produced. The batch size is 4 tons. The granulometric curve of the asphalt mix was an AC 22 BS. The grain size distribution obtained for the produced asphalt mix is given in Table 2. The asphalt mix comprises 50 wt.% reclaimed asphalt (aggregates + asphalt) and 50 wt.% virgin material. The total asphalt content in the mixture of asphalt and aggregates was 4.8 wt.%, i.e. 192 kg asphalt per 4 t batch. 108 kg of 192 kg asphalt originate from reclaimed asphalt and the remaining 84 kg stem from the addition of a PmB 25/55-55 RC (SBS modified bitumen with a softening point of 62.6 °C). Virgin granular material and reclaimed asphalt were preheated separately from each other and subsequently mixed together for 6 s (pre-mix). Heating power and mixing time were adjusted such that a temperature of 160-175 °C of the final asphalt mix composition can be achieved. 84 kg PmB 25/55-55 RC was preheated to a temperature of 165-175 °C and weight into the asphalt balance. The asphalt together with the premixed material (mixture of virgin aggregates and reclaimed asphalt having a temperature of ≤200 °C) were added to the mixing unit (double shaft compulsory mixer) and the resulting mixture is further mixed, wherein the total duration of further mixing is 18 s. The temperature of the resulting final asphalt mix composition at this stage of the process was determined to be 165-175 °C (see Table 3). Subsequently, the asphalt mix composition was released to the silo where it may be loaded onto a truck or stored for several hours. The mix is used for road pavements.

### Comparative example 2. Asphalt laydown at 160-170 °C (asphalt: modified with SBS, PmB 25/55-55 RC)

The produced asphalt mix composition of comparative example 1 was employed for road pavement (binder layer, AC 22 BS). The pavement was carried out with a Vögele paver Super 1800-3i. The temperature of the asphalt mix composition during laydown was in the range of 160 °C to 170 °C (see Table 6). The bitumen emissions (aerosols and fumes) during laydown were determined to be: 2.81 mg/m³, 3.07 mg/m³, and 10.38 mg/m³ (see Table 6). Moreover, samples of the asphalt mix composition were taken directly at the paver. Subsequently, the asphalt binder was extracted from the samples according to the procedure described above and subjected to various characterization methods. Results are given in Table 4.

Comparative example 3. Preparation of an asphalt mix composition in an asphalt mixing plant at typical mixing temperatures (asphalt: no modification, paving grade asphalt)

A batch asphalt mixing plant was equipped with a customized dosing system (heatable dosing line, dosing pump) which allows the dosage of a thermosetting reactive compound to the asphalt balance (stirred vessel) of the asphalt mixing plant. Furthermore, the asphalt balance was equipped with a stirrer which is engaged when i) a thermosetting reactive compound is dosed and ii) a minimum filling level of 20 kg asphalt is reached. The amount and speed of additive dosage as well as mixing is controlled via the process control system of the asphalt mixing plant. For comparative example 3, a thermosetting reactive compound was not dosed. 7 t of an asphalt mix composition where the asphalt mix composition contained 2.1 wt.% unmodified (paving grade) asphalt (pen grade 70/100 i.e. a needle penetration of 7-10 mm according to DIN EN 1426) were produced. The batch size is 3.5 tons. The granulometric curve of the asphalt mix was an AC 22 BS. The asphalt mix comprises 50 wt.% reclaimed asphalt (aggregates + asphalt) and 50 wt.% virgin material. The total asphalt content in the mixture of asphalt and aggregates was 4.8 wt.%, i.e. 168 kg asphalt per 3.5 t batch. 94.5 kg of 168 kg asphalt originate from reclaimed asphalt and the remaining 73.5 kg stem from the addition of an unmodified (paving grade) asphalt pen 70/100.

Virgin granular material and reclaimed asphalt were preheated separately from each other and subsequently mixed together for 6 s. Heating power and mixing time were adjusted such that a temperature of 160-175 °C of the final asphalt mix composition can be achieved. 73.5 kg unmodified (paving grade) asphalt pen 70/100 was preheated to a temperature of 165-175 °C and weight into the asphalt balance. The asphalt together with the premixed material (mixture of virgin aggregates and reclaimed asphalt having a temperature of ≤200 °C) were added to the mixing unit (double shaft compulsory mixer) and the resulting mixture is further mixed, wherein the total duration of further mixing is 20 s. The temperature of the resulting final asphalt mix composition at this stage of the process was determined to be 161 °C (see Table 3). Subsequently, the asphalt mix composition was released to the silo which was unloaded shortly after to take samples of the asphalt mix. The asphalt binder of respective samples was extracted according to the procedure described in chapter 3. The recovered asphalt was then subjected to various characterization methods. Results are given in Table 4.

**Table 1. Analysis of the prepared asphalt mix composition from example 1.**

| **Grain size classes** | **Asphalt mix** | **Target** | | **Grain size cumulative** | **Asphalt mix** | **Target** | **Tolerance range** |
|---|---|---|---|---|---|---|---|
| **mm** | wt.% | wt. % | | **wt. %** | wt.% | wt.% | wt. % |
| **22.4 - 31.5** | 1.2 | 0.8 | | **>22.4** | 1.2 | 0.8 | max. 10.0 |
| **16.0 - 22.4** | 21.8 | 29.2 | | **>16.0** | 23.0 | 30.0 | 21.0 - 39.0 |
| **11.2 - 16.0** | 18.8 | 9.9 | | | | | |
| **8.0 - 11.2** | 8.4 | 8.6 | | | | | |
| **5.6 - 8.0** | 9.1 | 8.8 | | | | | |
| **2.0 - 5.6** | 16.0 | 16.6 | | **>2.0** | 75.3 | 73.9 | 65.9 - 81.9 |
| **0.125 - 2.0** | 16.7 | 17.7 | | **Sand <2.0 >0.063** | 18.0 | 19.1 | 11.1 - 27.1 |
| **0.063-0.125** | 1.3 | 1.4 | | | | | |
| **<0.063** | 6.8 | 7.0 | | **Filler <0.063** | 3.8 | 7.0 | 4.0 - 10.0 |
| | | | | | | | |
| **Asphalt binder** | 4.1 | 4.3 | | **Asphalt binder** | 4.1 | 4.3 | 3.9 - 4.7 |

**Table 2. Analysis of the prepared asphalt mix composition from comparative example 1.**

| **Grain size classes** | **Asphalt mix** | **Target** | | **Grain size cumulative** | **Asphalt mix** | **Target** | **Tolerance range** |
|---|---|---|---|---|---|---|---|
| **mm** | wt.% | wt. % | | **wt. %** | wt.% | wt.% | wt. % |
| **22.4 - 31.5** | 1.4 | 1.6 | | **>22.4** | 1.4 | 1.6 | max. 10.0 |
| **16.0 - 22.4** | 16.5 | 23.6 | | **>16.0** | 17.9 | 25.2 | 16.2 - 34.2 |
| **11.2 - 16.0** | 22.0 | 12.2 | | | | | |
| **8.0 - 11.2** | 8.0 | 6.8 | | | | | |
| **5.6 - 8.0** | 9.7 | 7.2 | | | | | |
| **2.0 - 5.6** | 16.6 | 17.1 | | **>2.0** | 74.2 | 38.5 | 60.5 - 76.5 |
| **0.125 - 2.0** | 17.5 | 23.2 | | **Sand <2.0 >0.063** | 18.8 | 24.6 | 16.6 - 32.6 |
| **0.063 - 0.125** | 1.3 | 1.4 | | | | | |
| **<0.063** | 7.0 | 6.9 | | **Filler <0.063** | 7.0 | 3.9 | 3.9 - 9.9 |
| | | | | | | | |
| **Asphalt binder** | 4.3 | 4.6 | | **Asphalt binder** | 4.3 | 4.6 | 4.2 - 5.0 |

**Table 3. Asphalt mixing plant parameters of asphalt mix compositions.**

| | **As20* / wt.%** | **Mixing time of asphalt with As20 / s** | **Mixing time of As20 modified asphalt with aggregates / s** | **Temperature of asphalt mix composition** |
|---|---|---|---|---|
| **Example 1** | 2.0 | 10 | 20 | 145-150 °C |
| **Comp. Example 1** | - | - | - | 165-170 °C |
| **Comp. Example 3** | - | - | - | 161 °C |

| | | | | |
|---|---|---|---|---|
| (*) referred to total mass of bitumen | | | | |

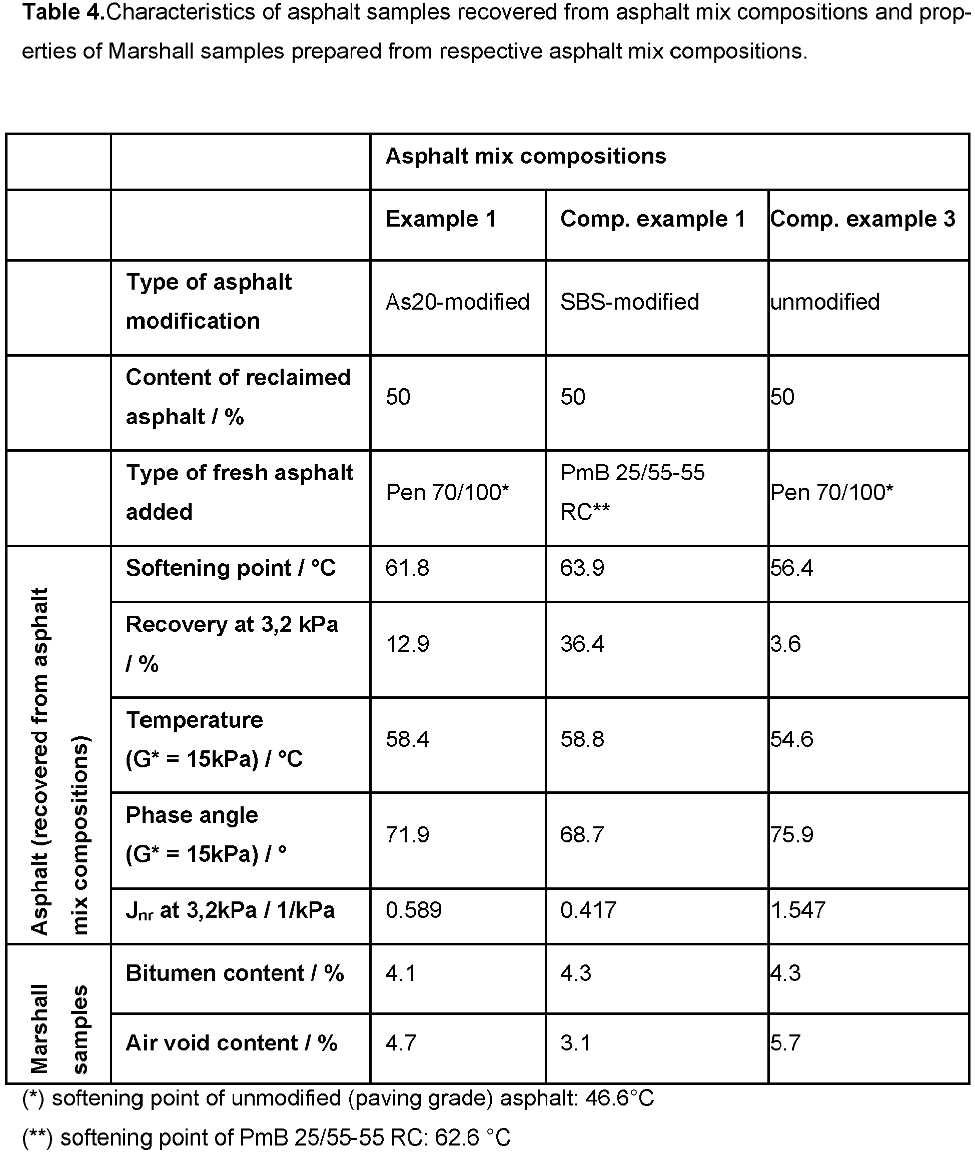

**Table 5.Dynamic viscosity of unmodified, As20-modified (2 wt.% As20 referred to total bitumen mass) and SBS-modified asphalt binders.**

| | | **Dynamic Viscosity / mPas** | |
|---|---|---|---|
| **Variants** | **Softening point / °C** | **@135 °C** | **@150 °C** |
| **Unmodified** | 50.4 | 480 | 240 |
| **As20-modified (2 wt.% As20)** | 63.0 | 1.250 | 550 |
| **PmB** | 63.7 | 2.430 | 1.210 |

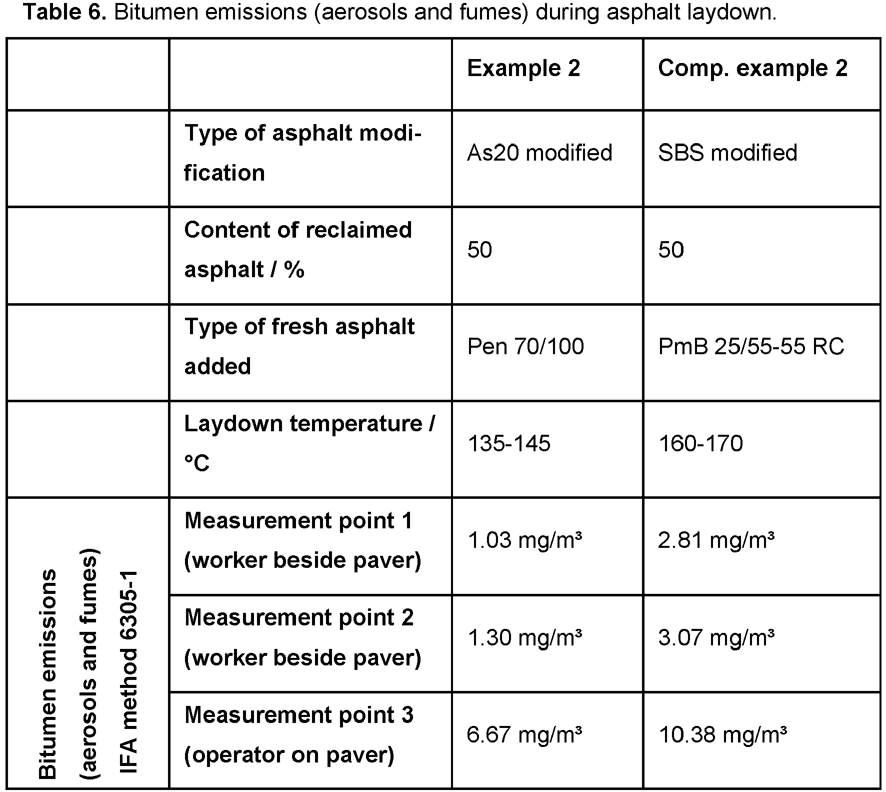

It was surprisingly found that an asphalt mix composition prepared according to the invention even with a content of 50 wt.% reclaimed asphalt can still be well processed during paving where the temperature of the asphalt mix at the paving process is in the range of 110-155 °C. When comparing the characteristics of the recovered asphalt binders in Table 4, the asphalt binder modification with As20 worked well: compared to the unmodified variant, softening point and recovery at 3.2 kPa are increased, phase angle and non-recoverable creep compliance (Jₙᵣ) are decreased. Additionally, the performance characteristics of SBS- and As20-modified binders are at a similar level.

As can be seen in Table 5, the As20 modification of asphalt binders generally increases the viscosity of the unmodified binder, however, to a much lower extent than an SBS modification. This explains the excellent workability of asphalt mix compositions containing As20-modified binder at temperatures between 130 °C and 155 °C when compared to asphalt mixes containing SBS modified binder at these temperatures. It is known that the SBS modified asphalt mixes cannot be properly processed at such low temperatures. This is also reflected by the example in Table 5: the viscosity of the polymer modified bitumen is almost twice as high at 135 °C as for As20-modified bitumen.

## Claims

1. A process for the preparation of an asphalt mix composition, said process comprising:
(1) providing an asphalt composition and heating said composition to a temperature in the range of from 150 to 175 °C;
(2) providing a granular material and heating said material to a temperature in the range of from 130 to 170 °C; wherein the granular material provided in (2) comprises from 5 to 100 weight-% of reclaimed asphalt pavement.
(3) providing one or more thermosetting reactive compounds wherein the one or more ther mosetting reactive compound is a polyisocyanate and wherein the weight ratio of the total amount of the one or more thermosetting reactive compound to the asphalt composition is in the range of from 0.1 : 99.9 to 25 : 75
(4) adding the one or more thermosetting reactive compounds provided in (3) to the asphalt composition obtained in (1) and homogenizing the mixture for a duration in the range of from 2 to 180 s;
(5) adding the mixture obtained in (4) to the granular material obtained in (2) and homoge nizing the slurry for a duration in the range of from 5 to 180 s, wherein the temperature of
the resulting asphalt mix composition is in the range of from 130 to 155°C and wherein the weight ratio of the mixture obtained in (4) to the granular material obtained in (2) is in the range of from 0.5 : 99.5 to 25 : 75.

2. The process of claim 1, wherein after (4) and prior to (5) the mixture obtained in (4) is stored at a temperature in the range of from 130 to 160 °C.

3. The process of claim 1 or 2, wherein after (4) and prior to (5) the mixture obtained in (4) is subject to mixing at a mixing rate of 100 rpm or less.

4. The process of claim 1, wherein the mixture obtained in (4) is directly processed in (5).

5. The process of any one of claims 1 to 4, wherein the granular material provided in (2) comprises one or more granular materials selected from the group consisting of gravel, reclaimed asphalt pavement, sand, one or more filler materials, and mixtures of two or more thereof.

6. The process of any one of claims 1 to 5, wherein the asphalt composition provided in (1) comprises one or more additives.

7. The process of any one of claims 1 to 6, wherein the granular material provided in (2) displays a grain size in the range of from 0.1 to 70 mm.

8. The process of any one of claims 1 to 7, wherein (4) and/or (5) are conducted under an oxygen containing atmosphere.

9. The process of any one of claims 1 to 8, wherein (4) and/or (5) are conducted as a batch process or as a continuous process.

10. An asphalt mix composition obtained or obtainable according to the process of any one of claims 1 to 9.

11. Use of an asphalt mix composition according to claim 10 for pavement applications.

12. A process for asphalting at reduced laydown temperatures comprising,
(1) Loading a vehicle designed for asphalt mix transportation from the silo of an asphalt mixing plant with the asphalt mix composition obtained according to the process of any one of claims 1 to 9
(2) Feeding the paver at the construction site with said asphalt mix composition
(3) Asphalt laydown by the paver and subsequent compaction by a road roller
wherein the temperature during laydown is in the range of from 110°C to 155 °C

13. The process according to claim 12, wherein the sum of bitumen aerosols and fumes during asphalting is below 10 mg/m³.

## Patentansprüche

1. Verfahren zum Herstellen einer Asphaltmischungszusammensetzung, wobei das Verfahren umfasst:
(1) Bereitstellen einer Asphaltzusammensetzung und Erwärmen der Zusammensetzung auf eine Temperatur im Bereich von 150 bis 175 °C;
(2) Bereitstellen eines granularen Materials und Erwärmen des Materials auf eine Temperatur im Bereich von 130 bis 170 °C; wobei das in (2) bereitgestellte granulare Material zu 5 bis 100 Gew.-% wiedergewonnenen Asphaltbelag umfasst.
(3) Bereitstellen einer oder mehrerer wärmehärtender reaktiver Verbindungen, wobei es sich bei der einen oder den mehreren wärmehärtenden reaktiven Verbindung um ein Polyisocyanat handelt und wobei das Gewichtsverhältnis der Gesamtmenge der einen oder der mehreren wärmehärtenden reaktiven Verbindungen zu der Asphaltzusammensetzung im Bereich von 0,1 : 99,9 bis 25 : 75 liegt,
(4) Zugeben der in (3) bereitgestellten einen oder mehreren wärmehärtenden reaktiven Verbindungen zu der in (1) erhaltenen Asphaltzusammensetzung und Homogenisieren der Mischung für eine Dauer im Bereich von 2 bis 180 s;
(5) Zugeben der in (4) erhaltenen Mischung zu dem in (2) erhaltenen granularen Material und Homogenisieren der Aufschlämmung für eine Dauer im Bereich von 5 bis 180 s, wobei die Temperatur der erhaltenen Asphaltmischungszusammensetzung im Bereich von 130 bis 155 °C liegt und wobei das Gewichtsverhältnis der in (4) erhaltenen Mischung zu dem in (2) erhaltenen granularen Material im Bereich von 0,5 : 99,5 bis 25 : 75 liegt.

2. Verfahren nach Anspruch 1, wobei nach (4) und vor (5) die in (4) erhaltene Mischung bei einer Temperatur im Bereich von 130 bis 160 °C aufbewahrt wird.

3. Verfahren nach Anspruch 1 oder 2, wobei nach (4) und vor (5) die in (4) erhaltene Mischung einem Mischen bei einer Mischgeschwindigkeit von 100 rpm oder weniger unterzogen wird.

4. Verfahren nach Anspruch 1, wobei die in (4) erhaltene Mischung in (5) direkt verarbeitet wird.

5. Verfahren nach einem der Ansprüche 1 bis 4, wobei das in (2) bereitgestellte granulare Material ein oder mehrere granulare Materialien umfasst, die ausgewählt sind aus der Gruppe bestehend aus Schotter, wiedergewonnenem Asphaltbelag, Sand, einem oder mehreren Füllmaterialien und Mischungen von zwei oder mehr davon.

6. Verfahren nach einem der Ansprüche 1 bis 5, wobei die in (1) bereitgestellte Asphaltzusammensetzung ein oder mehrere Additive umfasst.

7. Verfahren nach einem der Ansprüche 1 bis 6, wobei das in (2) bereitgestellte granulare Material eine Korngröße im Bereich von 0,1 bis 70 mm aufweist.

8. Verfahren nach einem der Ansprüche 1 bis 7, wobei (4) und/oder (5) unter einer sauerstoffhaltigen Atmosphäre durchgeführt werden.

9. Verfahren nach einem der Ansprüche 1 bis 8, wobei (4) und/oder (5) als Batch-Verfahren oder als kontinuierliches Verfahren durchgeführt werden.

10. Asphaltmischungszusammensetzung, erhalten oder erhältlich durch das Verfahren nach einem der Ansprüche 1 bis 9.

11. Verwendung einer Asphaltmischungszusammensetzung nach Anspruch 10 für Straßenbelaganwendungen.

12. Verfahren zum Asphaltieren bei verringerten Einbautemperaturen, umfassend:
(1) Beladen eines für den Transport von Asphaltmischungen ausgelegten Fahrzeugs aus dem Silo einer Asphaltmischanlage mit der durch das Verfahren nach einem der Ansprüche 1 bis 9 erhaltenen Asphaltmischungszusammensetzung,
(2) Beschicken des Straßenfertigers auf der Baustelle mit der Asphaltmischungszusammensetzung,
(3) Asphalteinbau durch den Straßenfertiger und anschließende Verdichtung durch eine Straßenwalze, wobei die Temperatur während des Einbaus im Bereich von 110 °C bis 155 °C liegt.

13. Verfahren nach Anspruch 12, wobei die Summe der Bitumenaerosole und Dämpfe während des Asphaltierens unter 10 mg/m³ liegt.

## Revendications

1. Procédé pour la préparation d'une composition de mélange d'asphalte, ledit procédé comprenant :
(1) la fourniture d'une composition d'asphalte et le chauffage de ladite composition jusqu'à une température dans la plage allant de 150 à 175 °C ;
(2) la fourniture d'une matière granulaire et le chauffage de ladite matière jusqu'à une température dans la plage allant de 130 à 170 °C ; la matière granulaire fournie en (2) comprenant 5 à 100 % en poids de chaussée en asphalte récupérée,
(3) la fourniture d'un ou plusieurs composés réactifs thermodurcissables, le ou les composés réactifs thermodurcissables étant un polyisocyanate, et le rapport en poids de la quantité totale du ou des composés réactifs thermodurcissables sur la composition d'asphalte étant dans la plage allant de 0,1 : 99,9 à 25 : 75
(4) l'ajout du ou des composés réactifs thermodurcissables fournis en (3) à la composition d'asphalte obtenue en (1) et l'homogénéisation du mélange pendant une durée dans la plage allant de 2 à 180 s ;
(5) l'ajout du mélange obtenu en (4) à la matière granulaire obtenue en (2) et l'homogénéisation de la suspension pendant une durée dans la plage allant de 5 à 180 s, la température de la composition de mélange d'asphalte résultante étant dans la plage allant de 130 à 155 °C, et le rapport en poids du mélange obtenu en (4) sur la matière granulaire obtenue en (2) étant dans la plage allant de 0,5 : 99,5 à 25 : 75.

2. Procédé selon la revendication 1, après (4) et avant (5), le mélange obtenu en (4) étant stocké à une température dans la plage allant de 130 à 160 °C.

3. Procédé selon la revendication 1 ou 2, après (4) et avant (5), le mélange obtenu en (4) étant soumis à un mélange à une vitesse de mélange de 100 tpm ou moins.

4. Procédé selon la revendication 1, le mélange obtenu en (4) étant directement traité en (5).

5. Procédé selon l'une quelconque des revendications 1 à 4, la matière granulaire fournie en (2) comprenant une ou plusieurs matières granulaires choisies dans le groupe constitué par le gravier, la chaussée en asphalte récupérée, le sable, une ou plusieurs matières de charge et des mélanges de deux ou plus de ceux-ci.

6. Procédé selon l'une quelconque des revendications 1 à 5, la composition d'asphalte fournie en (1) comprenant un ou plusieurs additifs.

7. Procédé selon l'une quelconque des revendications 1 à 6, la matière granulaire fournie en (2) présentant une taille de grain dans la plage allant de 0,1 à 70 mm.

8. Procédé selon l'une quelconque des revendications 1 à 7, (4) et/ou (5) étant conduites sous une atmosphère contenant de l'oxygène.

9. Procédé selon l'une quelconque des revendications 1 à 8, (4) et/ou (5) étant conduites comme un procédé en lot ou comme un procédé continu.

10. Composition de mélange d'asphalte obtenue ou pouvant être obtenue selon le procédé selon l'une quelconque des revendications 1 à 9.

11. Utilisation d'une composition de mélange d'asphalte selon la revendication 10 pour des applications de chaussée.

12. Procédé pour l'asphaltage à des températures de dépôt réduites comprenant :
(1) le chargement d'un véhicule conçu pour le transport d'un mélange d'asphalte du silo d'une installation de mélange d'asphalte avec la composition de mélange d'asphalte obtenue selon le procédé selon l'une quelconque des revendications 1 à 9 ;
(2) l'alimentation de la paveuse au niveau du site de construction avec ladite composition de mélange d'asphalte ;
(3) le dépôt d'asphalte par la paveuse et le compactage subséquent par un rouleau compresseur ;
la température pendant le dépôt étant dans la plage allant de 110 °C à 155 °C.

13. Procédé selon la revendication 12, la somme d'aérosols et de fumées de bitume pendant l'asphaltage étant inférieure à 10 mg/m³.
